# EUROPEAN PATENT APPLICATION

(11) **EP 1 447 212 A1**
(43) Date of publication of application: **18.08.2004**
(21) Application number: 03290331.2
(22) Date of filing: 11.02.2003
(51) Int. Cl.: B32B 5/26, B32B 5/06, B32B 17/02, D04H 13/00, D06N 5/00, E04D 5/02

(54) **Complex comprising a wetlaid veil of glass fibres and a veil of organic fibres**

(71) Applicant: Saint-Gobain Vetrotex France S.A., 73000 Chambéry (FR)
(72) Inventor: Droux, Michel, 73490 La Ravoire (FR); Berkhoff, Marc, 6717 Ede (NL); Lucas, Leonardus, 6921 Duiven (NL); Daniel, Eric, 73000 Chambery (FR)
(74) Representative: Colombier, Christian

(57) **Abstract**

The invention concerns a process for preparing a complex sheet comprising a layer of wetlaid glass fibres and a layer of organic fibres, comprising the following steps:
- mechanical needling or fluid entanglement, e.g. hydroentanglement, of a veil of organic fibres and of a web or layer of non-preconsolidated glass fibres, the said veil of organic fibres and the said web of glass fibres being juxtaposed and the said needles respectively the fluid, water jets being sent from the same side as the veil of organic fibres, in order to make a bilayer; and then
- application of a binder to the bilayer.

The so obtained complex fibrous structure shows a low tendency to delaminate and can be used in the field of roofing or sealing membranes.

## Description

The invention relates to a complex fibrous structure comprising a veil of glass fibres and a veil of organic fibres, used in the field of roofing or sealing membranes.

Roofing or sealing coverings or membranes for the building sector may be produced by impregnating fibrous structures, such as glass-fibre or polyester-fibre veils, with an asphalt or bitumen. The glass fibres provide a high tensile strength, a high modulus at low elongation, but have a low tear strength and a low puncture resistance. Moreover, glass-fibre veils give the impregnated structure great dimensional stability during processing and over time, and a great fire retardancy.

Glass veils can be obtained by any technique known per se, in particular the so-called wet technique, described for example in the reference work *"The Manufacturing Technology of Continuous Glass Fibres"* by K. L. Loewenstein, Elsevier, 2nd edition, 1983, pp 315-317. This technique, which resembles papermaking techniques, consists in preparing an aqueous suspension of chopped glass fibres, in depositing this suspension as a film on a filtering conveyor belt to which suction is applied in order to remove some of the water from the deposited film, in applying a binder composition to the wet film, in drying the veil and crosslinking the binder in an oven, and then in packaging the veil in the desired manner.

The final product is in the form of a fairly thin sheet with a thickness of around 0.2 to 0.8 mm, generally packaged as rolls. The binder often comes from an aqueous composition based on a urea-formaldehyde or melamine-formaldehyde resin, these resins having a satisfactory temperature withstand capability at the subsequent processing temperatures for bitumen impregnation.

However, glass veils have the drawback of a relatively low tear strength and puncture resistance. This is prejudicial to the ease of use and, in particular, requires the user to take precautions during handling to form the membrane or when laying it, for example on a roof.

To remedy this drawback, there are complex substrates that combine a veil based on organic fibres, exhibiting good tear strength, with a glass mesh that gives the assembly dimensional stability.

To improve the tear strength and the puncture resistance of glass-fibre veils, it has already been sought to combine them with organic fibres, especially made of polyester such as PET (polyethylene terephthalate).

EP 0 763 505 discloses a glass-fibre mat for the manufacture of bituminous roofing shingles, the strength of which is improved by means of a urea-formaldehyde binder modified by a self-crosslinkable vinyl additive. In this mat, it is possible for a minor proportion of fibres not to consist of glass fibres but to be chosen, especially, from organic fibres such as nylon, polyester, polyethylene or polypropylene fibres.

FR 2 804 677 teaches a fibre-based veil that can be used for making bituminous membranes, which comprises glass staple fibres and organic, especially PET, fibres bonded together by a binder, the fibres having a shrinkage at 130°C of less than or equal to 5%. However, there are endeavours to further improve the tear strength properties of such veils by combining glass and PET fibres within the same layer.

Patents WO 01/09 428 and WO 01/09 420 have proposed structures that combine a glass veil with a polyester veil by needle bonding. According to this teaching, the glass veil is systematically bonded together by a binder before it is combined with the polyester veil.

WO 01/09 421 has proposed a similar structure, but the glass veil and the polyester veil are bonded together by hydro-dynamically needling.

However, there is a certain tendency of these structures to delaminate.

The present invention relates to a fibrous structure combining, on the one hand, a layer of wetlaid glass fibres and, on the other hand, a layer of organic fibres, the said structure being highly resistant to delamination.

According to the invention, the layer of organic fibres is juxtaposed with the glass fibres deposited as a web or layer, the said glass fibres being at this stage not bonded together, and then these two structures juxtaposed one on top of the other undergo a bonding step by mechanical needling or fluid entanglement, e.g. hydroentanglement, the needles respectively the fluid, water jets being applied to the layer of organic fibres. Then the bilayer thus obtained receives a chemical binder intended to further increase the cohesion of the assembly, not only within each of its individual layers but also to fasten the various layers together. The binder may comprise further additives, e.g. to improve fire retardancy, increase adhesion to the bitumen, etc.

According to the invention, it has been found that the absence of preconsolidation of the glass fibre web before fluid-jet or needle bonding makes the said fluid-jet or needle bonding more effective, which means that the interpenetration of fibres between the two different layers is greater. In addition, applying a binder to the entire structure comprising the two fibrous layers greatly contributes to improve the cohesion of the structure. Consequently, with a single binder-application step judiciously carried out after the two types of fibres have been juxtaposed, the final structure has a low tendency to delaminate.

Note that the expression "chemical bonding" is used in order to distinguish it from mechanical bonding, such as needle bonding or stitch bonding. A chemical binder is simply a product intended to intimately coat some of the fibres in order to form bridges between them, as a molten polymer would be able to do.

The term "veil" is understood to mean a thin sheet of nonwoven. The veils of organic fibres used within the context of the present invention generally have a mass per unit area ranging from 40 to 500 g/m² and more particularly from 80 to 300 g/m², for example about 150 g/m².

The invention relates to a process for preparing a complex comprising a layer of wetlaid glass fibres and a layer of organic fibres, comprising the following steps:
- mechanical needling or fluid entanglement, e.g. hydroentanglement, bonding of a veil of organic fibres and of a web or layer of non-preconsolidated chopped glass fibres, the said veil of organic fibres and the said web of glass fibres being juxtaposed and the said needles respectively the fluid, water jets being sent from the same side as the veil of organic fibres, in order to make a bilayer; and then
- application of a binder to the bilayer.

The manufacture of the glass-fibre web is itself conventional in the field of manufacturing glass-fibre veils by the wet technique. It comprises a step of dispersing chopped glass fibres in water and a step of forming a web on a conveyor. At this stage, the glass-fibre web is not dried and not bonded together. This means that, at this stage, no bridges are formed between the various glass fibres. At this stage, the glass-fibre web has a mass per unit area of 20 to 150 g/m².

Next, a veil of organic fibres is combined with the glass-fibre web by depositing one of these two elements on the other. In general, it is the veil of organic fibres that is deposited on the glass-fibre web.

The veil of organic fibres may have been continuously produced simultaneously with production of the glass-fibre web.

However, the veil of organic fibres may also have been manufactured beforehand and stored in roll form. It is then used at a later stage when it is combined with the glass-fibre web by unreeling rolls of organic fibres, generally on top of the glass-fibre web.

The two juxtaposed structures moving at the same speed then pass through a mechanical needling or fluid entanglement bonding device. Preferably, the needles respectively the fluid, water jets strike the two juxtaposed structures on the same side as the veil of organic fibres, since this veil is better able to withstand this treatment. Such mechanical needling or fluid entanglement bonding causes some of the organic fibres to penetrate the glass-fibre web structure, which penetration is the origin of the better cohesion between the two types of fibres within the final complex. The hydroentanglement bonding for example may be carried out with a water pressure ranging from 50 to 600 bar and more particularly from 100 to 250 bar, for example about 180 bar.

Next, a binder is applied to the bilayer. This step is generally carried out by applying a binder precursor followed by a heat treatment, which converts the binder precursor into a binder. In this case, the bilayer passes through a unit for applying a binder precursor that may be applied by a cascade, which means that the binder precursor is poured in the liquid state, in which it is generally in the form of a solution or an emulsion or a dispersion, on top of the bilayer in order to impregnate it. in this unit, the bilayer may also be immersed in a liquid bath containing the binder precursor and then dried.

The binder may be of the type of those normally used for glass-fibre veils or polyester veils. In particular, it may be plasticised polyvinyl acetate (PVAc), or a self-crosslinkable acrylic or styrene-acrylic or styrene-butadiene, or urea-formaldehyde, or melamine-formaldehyde. It may also be a mixture of two or more of these binders. In particular, a mixture of urea-formaldehyde, acrylic and polyvinyl acetate may be used. The excess binder precursor may be removed by suction through the forming wire.

The purpose of the heat treatment step is to evaporate the water and effect the possible chemical reactions between the various constituents and/or to convert the binder precursor into a binder and/or to give the binder its final structure. The heat treatment may be carried out by heating between 140 and 250°C, more generally between 180 and 230°C. The heat treatment time is generally from 2 seconds to 3 minutes and more generally from 1 to 2 minutes, for example 90 seconds at 200°C. The structure may be heat treated in a hot-air oven, the air circulating through the conveyor belt. The heat treatment may also be carried out by contact with heated rolls. The latter solution is preferred since it allows the dimensions of the structures to be better preserved during the heat treatment.

In general, the final complex, has a mass per unit area ranging from 60 to 840 g/m² and more generally from 115 to 550 g/m². This complex generally contains:
- from 20 to 150 g/m², and more generally from 30 to 100 g/m², of glass fibres, including their possible sizing;
- from 40 to 500 g/m², and more generally from 80 to 300 g/m², of organic fibres; and
- from 3 to 190 g/m², and more generally from 5 to 150 g/m², of binder, which includes any binder contained in the veil of organic fibres before it is assembled with the veil of glass fibres.

The complex thus obtained has:
- a high tear strength;
- a high tensile strength and elongation;
- a good fire retardancy;
- a high puncture resistance;
- a high resistance to delamination;
- a suitable air permeability; and
- an excellent dimensional stability during impregnation with a bitumen or asphalt and over time.

The glass fibres may have a diameter ranging from 8 to 20 µm and more particularly ranging from 10 to 16 µm. They are theoretically continuous but their actual length is comprised between 10 cm and 1 m. These may, for example, be E-glass or C-glass fibres.

The organic fibres may be made of a polyolefin, such as polyethylene or polypropylene, but are preferably made of polyester and more particularly of polyethylene terephthalate (PET). These fibres may have a linear density ranging from 2 to 30 dtex (1 dtex represents 1 dg fibre per kilometre) and more particularly ranging from 4 to 20 dtex. The fibres contained in the veil of organic fibres, and therefore also in the final complex, may be continuous.

Before being combined with the glass-fibre veil, the veil of organic fibres may have been preconsolidated by well-known means such as needling, calendering, hydroentanglement or chemical bonding. A "chemical" binder could be present in an amount of from 3 to 25% by weight of the veil of organic fibres. However, preferably, the veil of organic fibres contains no chemical binder before being combined with the glass-fibre veil. This is because it is preferred for this veil of organic fibres to have been simply needled or hydroentangled beforehand. The absence of binder from the veil of organic fibres makes the needled or fluid entangled bonding carried out on the bilayer more effective. In addition, the entire operation to produce the complex according to the invention then requires only a single binder application step, which is carried out on the needled- or fluid entangled bonded bilayer. In this case, the final complex sheet obtained is such that the binder is distributed approximately uniformly through the thickness.

In all cases, before being combined with the glass-fibre veil, the veil of organic fibres is dimensionally stabilized by a heat pretreatment, generally between 80 and 240°C in the case of polyester, so that its dimensions do not vary greatly during the process of manufacturing the complex according to the present invention, which may also involve a heat treatment. Such a heat pretreatment on the veil of organic fibres alone is for example carried out by passing the said veil of organic fibres between heated cylindrical rolls or under infrared panels or by similar means.

### EXAMPLE

A glass web was prepared by a wet technique, by making an aqueous dispersion of chopped E-glass fibres dispersed in water. The E-glass fibres were approximately 13 µm in diameter, chopped to 18 mm length. The dispersion contained 0.3% by weight of glass fibres, 0.1% by weight of hydroxyethylcellulose as thickening agent, 0.05% by weight of an ethoxylated alkylamine as dispersant, 0.02% by weight of an antifoam with the reference PP04-3840 from Nalco and 0.02% by weight of a fungicide with the reference 7320 from Nalco. This dispersion was continuously deposited on a permeable forming wire in order to form a web, the water passing through the holes of the forming wire. The web was not dried and contained no binder, it had a surface density of about 50 g/m² based on the glass content, that is to say as if it had been dried.

This glass web was combined in this state with a veil of polyester of the PET type processed earlier, that is to say it was manufactured and stored beforehand as a reef that was unwound in order to combine it continuously with the glass veil. This polyester veil had a mass per unit area of 150 g/m². To manufacture it, it was pre-needle-bonded and then dimensionally stabilized by a heat-treatment at 180°C.

The PET veil was continuously unwound on top of the glass web, then the two juxtaposed veils underwent a water-jet bonding operation, water pressure: 180 bar, via the top side, that is to say the PET side, and then the assembly passed through a binder bath containing water and 20% by weight of binder. This binder comprised, by weight, 80% urea-formaldehyde, 10% acrylic and 10% polyvinyl acetate. After draining off the binder, the assembly was dried between a series of heated rolls.

The final bilayer veil comprised about 16% by weight of binder and had a mass per unit area of 240 g/m². It comprised 50 g/m² of glass fibres, 150 g/m² of PET fibres and 40 g/m² of binder. This bilayer veil had the following properties:
- delamination resistance: greater than 20 N/5 cm;
- tensile strength at 20°C in Machine Direction: 600 N/5 cm;
- tensile strength at 180°C in Machine Direction: 160 N/5 cm;
- air permeability: greater than 1700 litres/s.m².

It also exhibited good dimensional stability and showed no wrinkles when tested in oven at 180°C for 5 min, that indicates a good dimensional stability when impregnated with hot asphalt.

## Claims

1. Process for preparing a complex sheet comprising a layer of wetlaid glass fibres and a layer of organic fibres, comprising the following steps:
- mechanical needling or fluid entanglement, e.g. hydroentanglement, of a veil of organic fibres and of a web or layer of non-preconsolidated glass fibres, the said veil of organic fibres and the said web of glass fibres being juxtaposed and the said needles respectively the fluid, water jets being sent from the same side as the veil of organic fibres, in order to make a bilayer; and then
- application of a binder to the bilayer.

2. Process according to the preceding claim, **characterized in that** the binder is applied by the application of a binder precursor followed by a heat treatment.

3. Process according to either of the preceding claims, **characterized in that** the veil of organic fibres is not preconsolidated before juxtaposition with the glass-fibre veil.

4. Process according to one of the preceding claims, **characterized in that** the complex sheet has a mass per unit area ranging from 60 to 840 g/m².

5. Process according to one of the preceding claims, **characterized in that** the complex sheet has a mass per unit area ranging from 115 to 550 g/m².

6. Process according to one of the preceding claims, **characterized in that** the complex sheet contains:
- from 20 to 150 g/m² of glass fibres;
- from 40 to 500 g/m² of organic fibres;
- from 3 to 190 g/m² of binder.

7. Complex sheet comprising a layer of wetlaid non-preconsolidated glass fibres and a layer of organic fibres, the said layers being bonded together by mechanical needling or fluid entanglement and by a chemical bonding.

8. Complex sheet obtainable by a process according to any one of claims 1 to 6.

9. Sheet according to claim 7 or 8, **characterized in that** the binder is distributed approximately uniform through its thickness.

10. Sheet according to one of the preceding sheet claims, **characterized in that** its mass per unit area ranges from 60 to 840 g/m².

11. Sheet according to one of the preceding sheet claims, **characterized in that** its mass per unit area ranges from 115 to 550 g/m².

12. Sheet according to one of the preceding sheet claims, **characterized in that** it contains:
- from 20 to 150 g/m² of glass fibres;
- from 40 to 500 g/m² of organic fibres;
- from 3 to 190 g/m² of binder.
